# EUROPÄISCHE PATENTSCHRIFT

(11) **EP 3 138 974 B1**
(45) Veröffentlichungstag und Bekanntmachung des Hinweises auf die Patenterteilung: **16.10.2019**
(21) Anmeldenummer: 16184339.6
(22) Anmeldetag: 16.08.2016
(51) Int. Cl.: E04B 1/76, F16B 13/14, F16B 5/01

(54) **BEFESTIGUNGSSYSTEM ZUR ANBRINGUNG VON DÄMMSTOFFPLATTEN ODER DERGLEICHEN DÄMMMITTEL AN EINEN TRAGENDEN UNTERGRUND**
FASTENING SYSTEM FOR ATTACHING INSULATING BOARDS OR SIMILAR INSULATING MATERIAL TO A SUPPORTING BASE
SYSTÈME DE FIXATION DE PLAQUES DE MATÉRIAU ISOLANT OU ISOLANT SIMILAIRE SUR UN FOND PORTEUR

(30) Priorität: 20.08.2015 DE 102015215941
(43) Veröffentlichungstag der Anmeldung: 08.03.2017
(73) Patentinhaber: Ranit Austria GmbH, 6830 Rankweil (AT)
(72) Erfinder: Keckeis, Harald, 6830 Rankweil (AT)
(74) Vertreter: Grosse, Wolf-Dietrich Rüdiger

(56) Entgegenhaltungen:
- EP-A2- 2 006 461
- DE-C1- 19 840 521

## Beschreibung

Die Erfindung betrifft ein Befestigungssystem zur Anbringung von Dämmstoffplatten oder dergleichen Dämmmittel an einen tragenden Untergrund sowie ein Befestigungssystem dafür, wobei in ein durch die Dämmstoffplatte bis in den Untergrund vorgebohrtes Loch, von denen abhängig von den Plattenabmessungen mehrere vorgesehen werden, eine Hülse, optional zusammen mit einem in das Loch des Untergrunds eingreifenden Dübel, mit einem von der Hülse aufgenommenen Befestigungsmittel in die Dämmstoffplatte versenkt eingebracht und mittels des Befestigungsmittels im Untergrund verankert wird, wobei es als mit einem Klebemittel verfüllbare Klebehülsen haltetellerlos ausgebildete Hülsen aufweist, die über ihren Umfang und ihre Länge verteilt mit Wanddurchbrechungen versehen sind.

Ein Befestigungssystem dieser Art ist aus EP 2 006 461 A2 bekannt.

Bei dem Befestigungsmittel handelt es sich vorrangig um eine Schraube oder einen Nagel. Unter dem Begriff tragender Untergrund wird neben Fassadenwänden auch jede Art von Unterkonstruktionen verstanden, auf die die Bauteile, insbesondere Leichtbauteile, wie Schaumstoffkörper und Wärme- bzw. schallisolierende Materialien in Form von Platten, Paneelen, Leisten etc. montiert werden. Derartige Befestigungssysteme finden insbesondere Verwendung zur Montage von Wärmedämm-Verbundsystemen auf Putzbasis zur Dämmung. Hierbei wird üblicherweise eine Dämmschicht, beispielsweise aus Polystyrolplatten oder aus hoch verdichteten Steinwolleplatten, auf das Mauerwerk geklebt, verdübelt sowie anschließend verputzt.

Durch die EP 2 042 666 A2 ist zur Montage einer Dämmstoffplatte an einer Unterkonstruktion ein Verfahren bekannt geworden, bei dem ein aus einem Halteteller und sich daran anschließend einer in eine Spreizzone übergehenden Dübelhülse bestehender, ein stiftartiges Spreizmittel aufnehmender, in ein in der Dämmstoffplatte und der Unterkonstruktion zuvor gebohrtes Loch eingesetzter Tellerdübel als Befestigungselement mit einem Einschraubmittel rotierend in das Isoliermaterial der Dämmstoffplatte eingetrieben wird, wobei in Eintriebrichtung vor dem Halteteller ein Senkloch entsteht, das nach außen abgedichtet wird und dessen aus der Dämmstoffplatte verdrängtes Isoliermaterial in der Dämmstoffplatte verbleibt.

Der als Befestigungselement in das Bohrloch der Dämmstoffplatte und der Unterkonstruktion gesteckte Tellerdübel besitzt einen Halte- bzw. Druckteller, der mit Durchgangsöffnungen bzw. Ausnehmungen versehen ist und an der in Einführrichtung unteren bzw. vorderen Seite Fräsvorrichtungen zum Ausfräsen der Dämmstoffplatte aufweist. Wenn die Eintreibvorrichtung, z. B. ein Schraubendreher, Akkuschrauber, Bohrer oder dergleichen Einschraubmittel, die dort in eine unmittelbar in einem Kopf des stiftartigen Spreizelementes, insbesondere eine Schraube oder ein Nagel, vorgesehene Werkzeugaufnahme eingreift, in Betrieb gesetzt wird, wird die Drehbewegung des Einschraubmittels von dem Spreizelement über eine Formschlussverbindung mit der Dübelhülse auf den Halte- bzw. Druckteller übertragen. Dabei wird die Dämmstoffplatte durch die Fräsvorrichtungen eingefräst, wobei das ausgefräste Dämmstoffmaterial durch die Durchgangsöffnungen des Haltetellers hindurchtreten kann.

Damit das ausgefräste Dämmstoffmaterial gleichwohl an die Umgebung gelangen kann, wird es in einer Auffangvorrichtung gesammelt, die als mit dem Halteteller verbindbare Kappe oder als Beutel oder nach oben hin geschlossener Tiefenanschlag der Eintreibvorrichtung ausgebildet sein kann. Die mit dem ausgefrästen Dämmstoffmaterial aufgeführte Kappe kann als Abdeckscheibe in der Dämmstoffplatte verbleiben; ansonsten muss zur Isolierung gegen die Umwelt in das Senkloch eine Abdeckscheibe eingesetzt werden.

Durch die EP 1 337 725 B1 ist es zum Befestigen von Wärmedämmplatten an einer Wand oder einer Decke, insbesondere zum nachträglichen Anbringen an einem Altbau, bekannt geworden, die Wärmedämmplatten ohne sie durchsetzende Befestigungselemente durch Verkleben an den Untergrund anzubringen. Hierzu werden Dübel, die einen unmittelbar zur Spreizzone benachbarten tellerartigen Dübelkopf aufweisen, in einer derartigen Anzahl auf der Wand bzw. Decke versetzt vorgesehen, dass auf jede Wärmedämmplatte mehrere Dübel kommen. Das vorbereitend, werden auf dem Untergrund zunächst die durch das benötigte Versatzmuster vorgegebene Befestigungspunkte für die Dübel ausge- bzw. vermessen und markiert, um dann die Bohrlöcher herzustellen, die Dübel darin einsetzen und durch Einschrauben eines Gewindestiftes oder durch Einschlagen eines Nagels spreizen zu können. Auf die tellerartigen Dübelköpfe der solchermaßen verankerten Dübel und auf den Untergrund wird danach Klebstoff aufgetragen, so dass sich danach die Wärmedämmplatten andrücken lassen.

Der Erfindung liegt daher die Aufgabe zugrunde, ein Befestigungssystem zu schaffen, mit denen sich bei der Verarbeitung von Wärmedämm-Verbundsystemen eine einfache Montage mit verringertem Aufwand erreichen läßt.

Erfindungsgemäß wird eine mit Wanddurchbrechungen versehene haltetellerlose Hülse nach dem Verankern des Befestigungsmittels in dem Untergrund mit einem das vorgebohrte Loch bis oberhalb der eingebrachten Hülse, dort weitestgehend bündig mit der Oberfläche der Dämmstoffplatte verlaufend, verschließenden und sich radial über die Wanddurchbrechungen bis in das Dämmstoffmaterial ausdehnenden, die Hülse umschließenden bzw. einkammernden Klebemittel verfüllt. Das Befestigungssystem erfordert somit keine Tellerdübel mehr, vielmehr reicht eine einfache, haltetellerlose, durchlöcherte Hülse aus. Die haltetellerlosen Hülsen ermöglichen eine sehr wirtschaftliche Montage, weil sie baugleich für alle vorkommenden Dämmstoffdicken verwendet werden können, d. h. ein Produkt erfüllt alle Anforderungen. Hingegen setzen Tellerdübel eine an die jeweilige Dämmstoffdicke stets angepasste Länge voraus, womit eine Bauteile-Vielfalt unvermeidlich ist.

Durch die Verfüllung mit dem Kleber, z. B. ein PU-Schaum-Kleber und dessen die Hülse einschließende innige Verbindung mit dem Dämmstoff, wird nicht nur eine die Auszugssicherheit erhöhende, in Zusammenspiel mit der Verankerung des Befestigungsmittels, insbesondere eine Schraube oder eine Schraube-Dübel-Kombination, im Untergrund großen Windlasten standhaltende Befestigung der Dämmstoffplatte ermöglicht, da sich höhere Festigkeitswerte als durch die technischen Prüfrichtlinien für die bisher üblichen Befestigungen vorgegeben erreichen lassen. Es wird weiterhin auch nicht mehr notwendig, das vorgebohrte Loch oberhalb der versenkten Hülse mit einer Abdeckscheibe bzw. Rondelle verschließen zu müssen. Denn auch der gesamte obere Loch-Hohlraum wird durch den Kleber ausgefüllt. Ein zusätzlicher Arbeitsgang und zusätzliche Arbeitsmittel, wie Rondellen, können damit entfallen. Gleichzeitig wird ein Wärmedurchgangskoeffizient von Null erreicht, weil das metallische Befestigungsmittel bzw. dessen unten in der Hülse zur Anlage kommender Schraubenkopf nach außen hin von dem Kleber völlig abgeschirmt ist.

Das erfindungsgemäße Befestigungssystem sieht vor, dass es als mit einem Klebemittel verfüllbare Klebehülsen haltetellerlos ausgebildete Hülsen aufweist, die über ihren Umfang und ihre Länge verteilt mit Wanddurchbrechungen ausgebildet sind. Beim Verfüllen der erfindungsgemäß durchlöcherten Hülse mit dem Klebemittel, passiert das Klebemittel die Durchbrechungen und breitet sich in der Folge in dem die Hülse umschließenden Dämmstoffmaterial aus, wodurch nach dem Aushärten des Klebers eine dauerhafte und feste Verbindung zwischen der Hülse und dem Dämmstoffmaterial erreicht wird.

Ein vorteilhafter Vorschlag der Erfindung sieht vor, dass die Hülsen konisch, sich in Montagerichtung verjüngend ausgebildet sind. Es werden hierdurch die Haltekräfte verbessert, womit das Befestigungssystem höheren Durchzugskräften standhalten kann. Hierzu können an der Hülse bzw. Klebehülse nach außen vorstehend angeformte Rippen oder dergleichen Vorsprünge unterstützend beitragen. Die konische Form erstreckt sich dabei über die gesamte Länge der Hülse. Die Hülse samt Schraube wird erfindungsgemäß mit einem Dübel montiert.

Erfindungsgemäß als Kombination der haltetellerlosen Hülse mit einem in das mit kleinerem Durchmesser in ein Mauerwerk vorgebohrte Bohrloch eintauchenden Dübel, wobei die Hülsen und Dübel durch Spritzgießen aus Kunststoff hergestellt sind, ist vorgesehen, dass der Dübel drehfest mit der Hülse verbunden ist, statt von vornherein einstückig an der Hülse angeformt zu sein, wozu der Dübel einen Mehrkantkopf aufweist und die Hülse im Inneren mit einer dazu komplementären Mehrkantaufnahme ausgebildet ist.

Dadurch wird bei einer die Anwendungsmöglichkeiten variabler gestaltenden Zweiteiligkeit von Hülse und Dübel gleichwohl erreicht, dass eine Befestigungsschraube problemlos in den Dübel geschraubt werden kann, ohne dass sich dabei der Dübel im Bohrloch mitdreht.

Weitere Merkmale und Einzelheiten der Erfindung ergeben sich aus den Ansprüchen und der nachfolgenden Beschreibung von in Fig.8a bis Fig.10 schematisch dargestellten Ausführungsbeispielen der Erfindung. Es zeigen:
- Fig. 1: in einem Längsschnitt eine haltetellerlose mit Wanddurchbrechungen versehene Hülse;
- Fig. 2: die Hülse gemäß Fig. 1 mit einem darin eingesetzten Dübel;
- Fig. 3: die Hülse gemäß Fig. 1 mit einer darin zur dübellosen Montage eingesetzten Schraube (kein Ausführungsbeispiel);
- Fig. 4: eine innerhalb einer Dämmstoffplatte eines Wärmedämm-Verbundsystems in einem Bohrungsloch eingebrachte Hülse mit Dübel gemäß Fig. 2, in der linken Zeichnungshälfte in einem Vormontagestadium ohne Befestigungsschraube und in der rechten Zeichnungshälfte nach der Fertigmontage mit Befestigungsschraube und Klebeverfüllung dargestellt;
- Fig. 5: in einem Längsschnitt eine haltetellerlose, mit Wanddurchbrechungen versehene Hülse;
- Fig. 6: die Hülse gemäß Fig. 5 mit einem darin eingesetzten Dübel;
- Fig. 7: die Hülse gemäß Fig. 5 mit einer darin eingesetzten Befestigungsschraube (kein Ausführungsbeispiel);
- Fig. 8a, 8b: ein Ausführungsbeispiel einer haltetellerlosen, mit Wanddurchbrechungen versehenen Hülse, in einer Längsansicht (Fig. 8a) dargestellt und von der Oberseite her gesehen (Fig. 8b);
- Fig. 9a, 9b: einen in die Hülse gemäß Fig. 8a einsetzbaren Dübel, in einer Längsansicht (Fig. 9a) dargestellt und von der Oberseite her gesehen (Fig. 9b); und
- Fig. 10: als Gesamtansicht die Hülse gemäß Fig. 8a mit dem darin eingesetzten Dübel gemäß Fig. 9a.

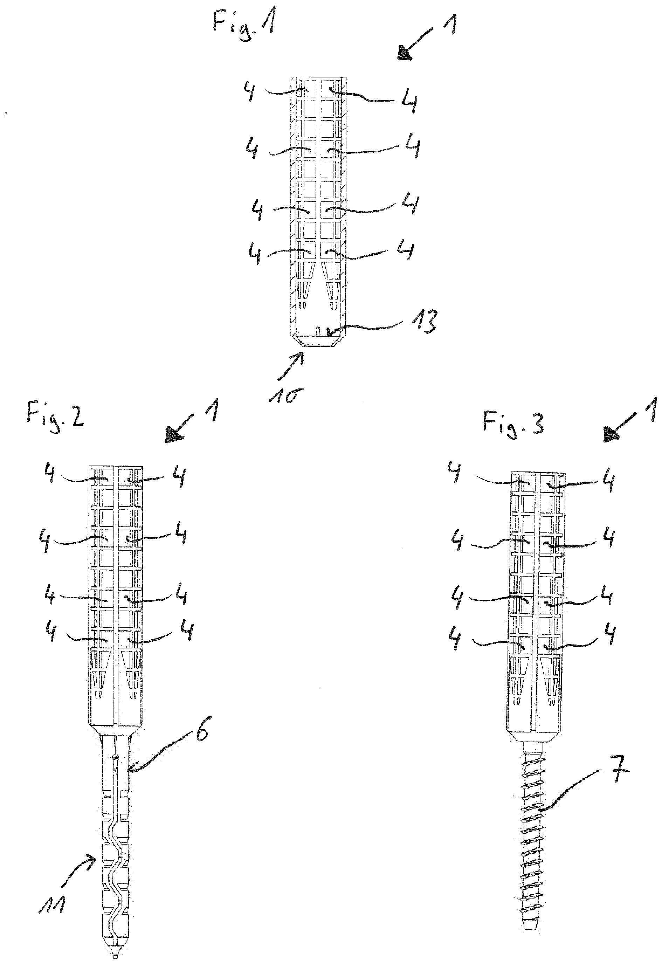

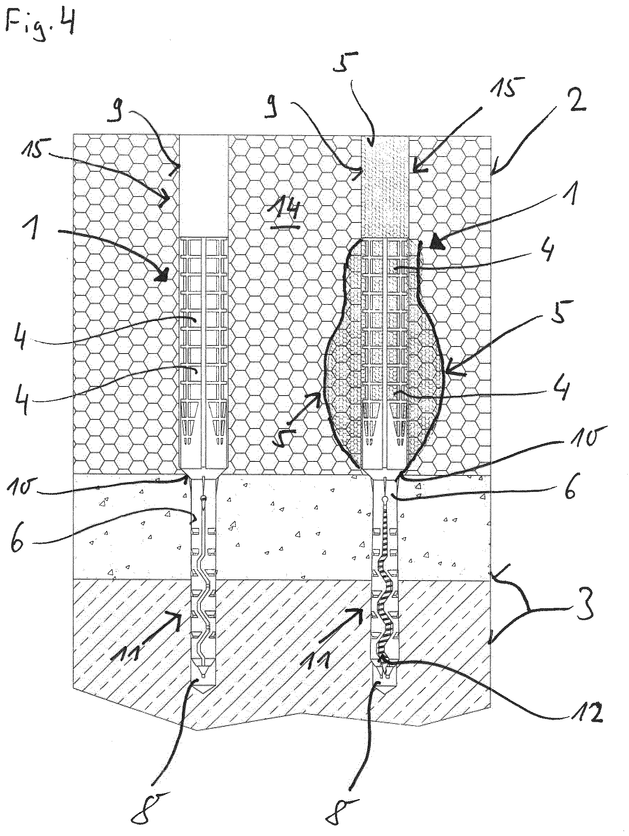

Eine in der Fig. 1 dargestellte haltetellerlose Hülse 1 zum Anbringen einer Dämmstoffplatte 2 eines Wärmedämm-Verbundsystems an einen tragenden Untergrund 3 ist über ihren Umfang und nahezu ihre gesamte Länge verteilt mit Wanddurchbrechungen 4 ausgebildet, über die sich ein Klebemittel 5 in der Dämmstoffplatte 2 ausdehnen kann (vgl. hierzu Fig. 4).

Wie der Fig. 3, welche nicht die Erfindung zeigt, zu entnehmen ist, nimmt die Hülse 1 zur bewegungssicheren Festlegung an einem tragenden Untergrund, wenn dieser aus z. B. Holz ist, lediglich eine Befestigungsschraube 7 bzw. Holzschraube auf. Sofern der tragende Untergrund 3 aus einem Mauerwerk besteht, erfolgt die Montage erfindungsgemäß mit Unterstützung durch einen in die Hülse 1 eingesetzten Dübel 6 (vgl. Fig. 2).

Die in Fig. 4 dargestellte Dämmstoffplatte 2 ist zur Anfangshaftung in einem ersten Schritt auf den tragenden Untergrund 3, hier ein Mauerwerk, geklebt worden. Im zweiten Schritt wird durch die Dämmstoffplatte 2 hindurch bis in das Mauerwerk 3 ein Bohrloch 8, entsprechend dem Durchmesser des Dübels 6, vorgebohrt.

Danach wird in die Dämmstoffplatte 2 eine gegenüber dem Bohrloch 8 des Dübels 6 größere Durchgangsbohrung 9 für die Aufnahme der Hülse 1 eingebracht, wobei sich die Durchgangsbohrung 9 bis zum Anfang des Mauerwerks 3 in der Dämmstoffplatte 2 erstreckt.

Sodann wird die Hülse 1 zusammen mit dem aufgenommenen Dübel 6 soweit in die Durchgangsbohrung 9 eingesetzt, bis der Dübel 6 vollständig in das vorgebohrte Loch 8 des Mauerwerks eingetaucht ist und die Hülse 1 mit ihrem voreilenden Ende 10 am Mauerwerk 3 anliegt (vgl. hierzu die linke Zeichnungshälfte von Fig. 4). Die Befestigungsschraube 7 kann zusammen mit der Hülse 1 und dem Dübel 6 oder nach der Positionierung dieser Einheit eingesetzt werden.

Die rechte Zeichnungshälfte von Fig. 4 zeigt die Hülse in fertig montiertem Zustand. Dabei ist zuvor der Dübel 6 im Bereich seiner Spreizzone 11 durch eine mittels eines Einschraubwerkzeugs eingeschraubte Befestigungsschraube 12 in dem Bohrloch 8 des Mauerwerks 3 verankert worden. Der Kopf der Befestigungsschraube 12 kommt hierbei vorteilhaft an einer am voreilenden Ende 10 im Inneren der Hülse 1 angeformten Auflagefläche 13 zur Anlage.

Das über die Durchgangsbohrung 9 und somit in die Hülse 1 eingebrachte Klebemittel 5 dehnt sich radial über die Wanddurchbrechungen 4 der Hülse 1 in dem Dämmstoffmaterial 14 der Dämmstoffplatte 2 aus, wobei die Hülse 1 von dem Klebemittel 5 umschlossen wird, wie in Fig. 4, rechte Bildhälfte, durch die dick ausgezogenen Begrenzungslinien der Klebeverfüllung angedeutet.

Insgesamt wird hierbei zunächst der gesamte Hohlraum der Hülse und dann der oberhalb der Hülse 1 verbleibende Freiraum 15 der Durchgangsbohrung 9 durch das Klebemittel 5 ausgefüllt. Nach dem Aushärten des Klebemittels 5 ist die Dämmstoffplatte 2 fest mit der Hülse 1 verbunden und der metallische Kopf der Befestigungsschraube 12 nach außen hin von dem Klebemittel 5 völlig abgeschirmt.

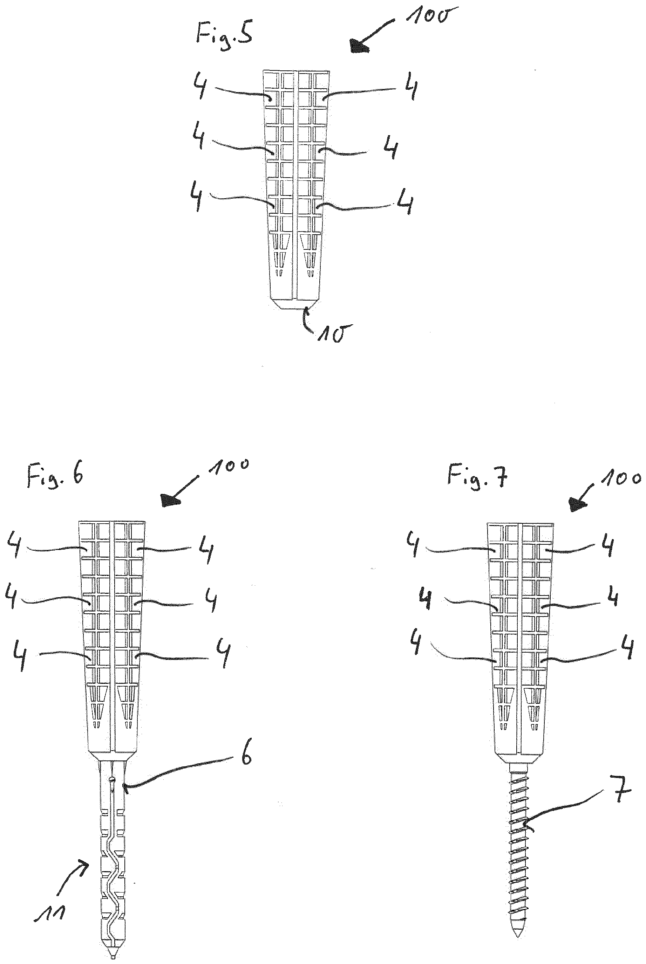

Die Fig. 5 zeigt eine Ausführung einer haltetellerlosen, mit Wanddurchbrechungen 4 versehenen Hülse 100, die eine konische Form aufweist.

Durch die konische Form der Hülse 100 wird eine Verbesserung der Haltekräfte innerhalb der Dämmstoffplatte 2 und der Durchzugskräfte bei der Verankerung im tragenden Untergrund 3 erreicht.

Die Montage der Dämmstoffplatte 2 mittels der Hülse 100, des Dübels 6 und der Befestigungsschraube 12 im tragenden Untergrund bzw. Mauerwerk 3 erfolgt wie zuvor anhand der Figur 4 geschildert.

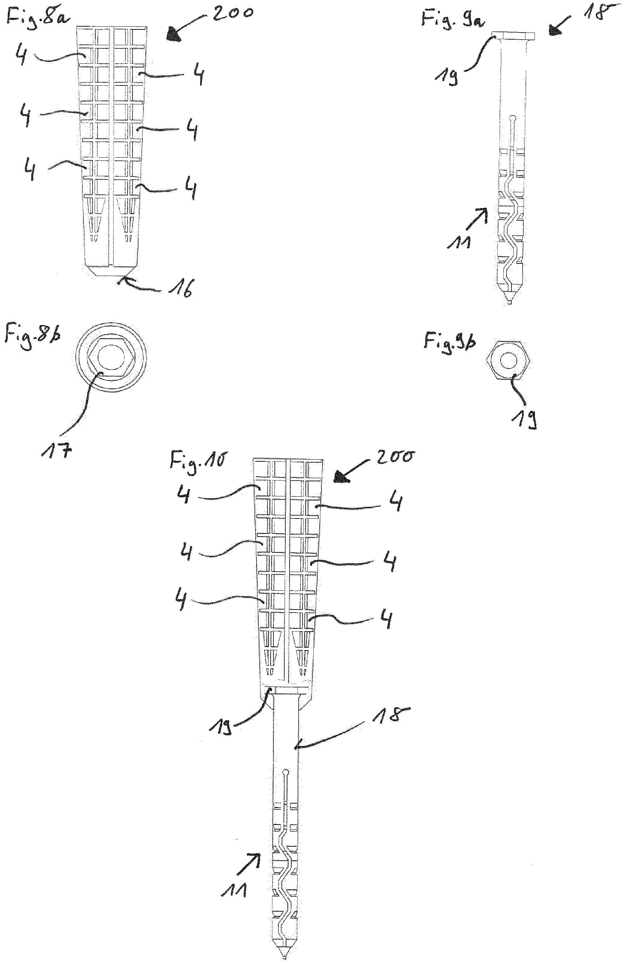

In den Figuren 8a, 8b ist ein Ausführungsbeispiel einer haltetellerlosen, mit Wanddurchbrechungen 4 versehenen Hülse 200 dargestellt, die ebenfalls eine konische Form aufweist und an ihrem voreilenden Ende 16 im Inneren mit einer Mehrkantaufnahme 17 ausgebildet ist. Dazu komplementär ist ein in den Figuren 9a, 9b gezeigter Dübel 18 mit einem Mehrkantkopf 19 versehen. Somit wird gemäß Figur 10 bei der Montage von Hülse 200 und Dübel 18 über die Mehrkantaufnahme 17 und den darin eingreifenden Mehrkantkopf 19 eine drehfeste Verbindung erreicht, so dass die Befestigungsschraube 12 problemlos in den Dübel 18 geschraubt werden kann, ohne dass sich der Dübel 18 im Bohrloch 8 mitdreht.

Die Montage der Dämmstoffplatte 2 mittels der Hülse 200, des Dübels 18 und der Befestigungsschraube 12 im tragenden Untergrund bzw. Mauerwerk 3 erfolgt wie zuvor anhand der Figur 4 beschrieben.

### Bezugszeichenliste:

- 1: haltetellerlose Hülse
- 2: Dämmstoffplatte
- 3: tragender Untergrund / Mauerwerk
- 4: Wanddurchbrechung
- 5: Klebemittel
- 6: Dübel
- 7: Befestigungsschraube
- 8: Bohrloch
- 9: Durchgangsbohrung
- 10: voreilendes Ende
- 11: Spreizzone Dübel
- 12: Befestigungsschraube
- 13: Auflagefläche
- 14: Dämmstoffmaterial
- 15: Freiraum
- 16: voreilendes Ende
- 17: Mehrkantaufnahme
- 18: Dübel
- 19: Mehrkantkopf

- 100: haltetellerlose konische Hülse
- 200: haltetellerlose konische Hülse

## Patentansprüche

1. Befestigungssystem zur Anbringung von Dämmstoffplatten (2) oder dergleichen Dämmmittel an einen tragenden Untergrund (3), wobei in ein durch die Dämmstoffplatte (2) bis in den Untergrund (3) vorgebohrtes Loch (8), von denen abhängig von den Plattenabmessungen mehrere vorgesehen werden, eine Hülse (1), zusammen mit einem in das Loch (8) des Untergrundes (3) eingreifenden Dübel (18), mit einem von der Hülse (1) aufgenommenen Befestigungsmittel (7, 12) in die Dämmstoffplatte (2) versenkt eingebracht und mittels des Befestigungsmittels (7, 12) im Untergrund (3) verankert wird, wobei es als mit einem Klebemittel (5) verfüllbare Klebehülsen haltetellerlos ausgebildete Hülsen (1, 100, 200) aufweist, die über ihren Umfang und ihre Länge verteilt mit Wanddurchbrechungen (4) versehen sind,
**dadurch gekennzeichnet,**
**dass** der Dübel (18) drehfest mit der Hülse (200) verbunden ist, wozu der Dübel (18) einen Mehrkantkopf (19) aufweist und die Hülse (200) im Inneren mit einer dazu komplementären Mehrkantaufnahme (17) ausgebildet ist.

2. Befestigungssystem nach Anspruch 1,
**dadurch gekennzeichnet,**
**dass** die Hülsen (1, 100, 200) konisch, sich in Montagerichtung verjüngend ausgebildet sind.

## Claims

1. An attachment system for securing insulation boards (2) or similar insulating materials to a load-bearing substrate (3), wherein a sleeve (1) together with a dowel (18) that engages into the hole (8) of the substrate (3) with an attachment means (7, 12) accommodated by the sleeve (1) is recessed into the insulation board (2) in a hole (8) predrilled through the insulation board (2) until into the substrate (3), several of which are provided as a function of the board dimensions, and anchored in the substrate (3) by means of the fastening means (7, 12), wherein it has sleeves (1, 100, 200) which, as adhesive sleeves fillable with an adhesive (5), are designed with no retaining plates and provided with wall apertures (4) distributed over their periphery and length,
**characterized in that**
the dowel (18) is non-rotatably connected with the sleeve (200), to which end the dowel (18) has a multi-edge head (19) and the interior of the sleeve (200) is configured with a multi-edge receptacle (17) complementary thereto.

2. The attachment system according to claim 1,
**characterized in that**
the sleeves (1, 100, 200) are conical and taper in the assembly direction.

## Revendications

1. Système de fixation pour l'installation de plaques d'isolation (2) ou de moyens d'isolation similaires sur une base porteuse (3), dans lequel, dans un trou (8) pré-percé à travers la plaque d'isolant (2) jusque dans la base (3) dont plusieurs sont prévus en fonction des dimensions des plaques, un tube (1), accompagné d'une cheville (18) s'engrenant dans le trou (8) de la base (3) est pratiqué avec un moyen de fixation (7, 12) reçu par le tube (1) dans la plaque d'isolation (2) et ancrée au moyen du moyen de fixation (7, 12) dans la base (3), sachant qu'il présente des tubes (1, 100, 200) réalisés sans plateau de retenue sous forme de tubes de collage pouvant être remplis d'une colle (5) et qui sont pourvus de percées de paroi (4) réparties sur sa circonférence et sa longueur,
**caractérisé en ce que**
la cheville (18) est connectée de manière fixe en rotation au tube (200), ce pourquoi la cheville (18) présente une tête à pans multiples (19) et le tube (200) est réalisé à l'intérieur avec un support à pans multiples (17) qui lui est complémentaire.

2. Système de fixation selon la revendication 1,
**caractérisé en ce que**
les tubes (1, 100, 200) ont une conformation conique se rétrécissant dans le sens de montage.
